# EUROPÄISCHE PATENTANMELDUNG

(11) **EP 1 617 649 A2**
(43) Veröffentlichungstag der Anmeldung: **18.01.2006**
(21) Anmeldenummer: 05104427.9
(22) Anmeldetag: 24.05.2005
(51) Int. Cl.: H04N 5/225

(54) **Kamera mit einem Gehäuseteil**

(30) Priorität: 16.07.2004 DE 102004034383
(71) Anmelder: ROBERT BOSCH GMBH, 70442 Stuttgart (DE)
(72) Erfinder: Uffenkamp, Volker, 71638, Ludwigsburg (DE); Seger, Ulrich, 71229, Warmbronn (DE); Apel, Uwe, 72666, Neckartailfingen (DE); Schick, Jens, 71083, Herrenberg (DE); Schmack, Andreas, 71229, Leonberg (DE)

(57) **Zusammenfassung**

Die Erfindung bezieht sich auf eine Kamera (10), insbesondere für die Anwendung in einem Automobil, mit wenigstens einem Gehäuseteil (12), das wenigstens eine Gehäusewand (14) mit wenigstens einer dichten Durchkontaktierung (16) umfasst, durch das eine elektrische Verbindung (36) einer außerhalb der Kamera (10) liegenden elektrischen Baugruppe (34) mit einer sich innerhalb der Kamera (10) befindenden elektrischen Platine (28) herstellbar ist. Mehrere Durchkontaktierungen (16) können einzeln in die Gehäusewand (14) eingebracht sein oder in ein Kontaktmodul (18) zusammen in die Gehäusewand (14) aufgenommen sein. Die elektrische Verbindung (36) dient wenigstens der Übertragung eines Videosignals und der Energieversorgung der Kamera (10).

## Beschreibung

### Technisches Gebiet

Eine Kamera für automotive Anwendungen, wie beispielsweise für ein Videosystem in einem Automobil, ist in einem Gehäuse gegen Umwelteinflüsse und zur Verringerung oder Verhinderung von Strahlungsemission gekapselt. Durch eine Gehäusewand eines Gehäuseteils, beispielsweise eines Gehäusedeckels oder einer Gehäusebox, des Gehäuses ist es dabei erforderlich, eine dichte elektrische Verbindung oder einen elektrischen Kontakt zwischen einer außerhalb der Kamera liegenden elektrischen Baugruppe mit einer sich innerhalb der Kamera befindenden elektrischen Platine herzustellen.

### Stand der Technik

Eine geläufige Art der Kontaktierung einer Kamera für automotive Anwendungen ist beispielsweise im Dokument WO 97/01246 offenbart. Ein miniaturisierte Kamera ist in einen Rückspiegel, der ein Gehäuse für die Kamera bildet, eingesetzt. Auf das Objektiv der Kamera fällt Licht, das durch einen nicht vollständig reflektierenden Spiegel dringt. Das Rückseitenteil des Rückspiegels ist mit einer Bohrung versehen, durch die ein Kabel mit einzelnen Leitungen für das Videosignal, die Erdung und die Energieversorgung verläuft, so dass das von der Kamera generierte Videosignal zu einem Monitor übertragen werden können.

Eine weitere bekannte Kontaktierungsart basiert auf einer Steckverbindung oder einem Buchsensystem. Eine Buchse ist auf der elektrischen Platine oder Leiterplatte der Kamera eingelassen und ragt durch eine entsprechende Aussparung im Gehäuse aus der Kamera heraus oder ist direkt in der Gehäusewand befestigt, so dass eine elektrische Verbindung von außen durch Einstecken realisiert werden kann. Beispielsweise ist eine Kamera für eine automotive Anwendung mit einer derartigen Steckverbindung im Dokument KR 2003/005618 offenbart. Die hermetische Abdichtung der Verbindung wird mittels Verschraubung über einem Dichtring gewährleistet.

Aus dem Dokument US 2002/0044202 A1 geht ein Stereokamerasystem hervor, welches zum Einsatz unter Wasser in einem Gehäuse dicht gekapselt ist. Die optischen und elektrischen Komponenten des Stereokamerasystems befinden sich in einem rohrförmigen Behälter, dessen offene Enden mit Deckeln verschließbar sind. Der hintere der Deckel weist ein wasserdichtes Verbindungselement auf, mit dem das Stereokamerasystem im Inneren des Behälters mit einem Kabel verbunden ist. Eine Signalleitung und eine Energieversorgungsleitung können von außen an das Verbindungselement angeschlossen werden.

Des weiteren ist aus dem Dokument JP 08-313446 eine miniaturisierte Kamera mit einem um eine Achse schwenkbaren Gehäuseteil bekannt. Die Schwenkbewegung wird mittels eines fixen Motors erzeugt. Eine elektrische Verbindungseinheit zum Gehäuse umfasst einen festen Stromkollektor und einen Rotationstransformator. Das Videosignal wird mittels eines Kabels im wesentlichen parallel zur Schwenkachse von einem Sensorelement abgeleitet.

Darüber hinaus ist im Dokument US 2002/0101534 A1 eine Aufnahmeeinheit für eine Digitalkamera mit einem Gehäuse, das Ausgabeanschlüsse aufweist, offenbart. Die Formgebung der Aufnahmeeinheit ermöglicht ein formschlüssiges Halten der Kamera, wobei die Ausgabeanschlüsse des Gehäuses in der Aufnahmeeinheit mit Eingabeanschlüssen an der inneren Seite der Aufnahmeeinheit in elektrische Verbindung zur Übertragung von digitalen Daten aus der Kamera auf Ausgabegeräte gebracht werden. Die Eingabeanschlüsse sind mit Ausgabeanschlüssen auf der äußeren Seite der Aufnahmeeinheit verbunden. Diese Ausgabeanschlüsse weisen Kabelverbindungen zu den einzelnen Ausgabegeräten auf.

### Darstellung der Erfindung

Erfindungsgemäß wird eine Kamera, insbesondere für die Anwendung in einem Automobil, mit wenigstens einem Gehäuseteil, beispielsweise einer Gehäusebox oder einem Gehäusedeckel, das wenigstens eine Gehäusewand, die wenigstens eine Durchkontaktierung oder einen elektrischen Leitungskanal, bevorzugt eine Anzahl von Durchkontaktierungen aufweist, geschaffen, so dass eine elektrische Verbindung einer außerhalb der Kamera liegenden Baugruppe, beispielsweise einer Steuerungseinheit mit Spannungsversorgung und Videosignalauswertung (auch Monitor oder Anzeigeeinrichtung), mit einer sich innerhalb der Kamera befindenden elektrischen Platine hergestellt wird. Die Anzahl von Durchkontaktierungen können einzeln in die Gehäusewand eingesetzt oder in einem Kontaktmodul zusammen in die Gehäusewand aufgenommen sein.

In besonders vorteilhafter Weise wird erfindungsgemäß eine Kamerakontaktierung geschaffen, so dass das Innere der Kamera beziehungsweise das Kameragehäuse dicht oder hermetisch geschlossen ist. Mit der erfindungsgemäßen elektrischen Verbindung der Kamera mittels Durchkontaktierung kann eine wenigstens einseitige, bevorzugt doppelseitige Kontaktierung erfolgen, ohne dass von außen eine zu große Krafteinwirkung auf die elektrische Platine ausgeübt wird, wobei es zu einer Dejustage des Sensorelements, der Optik oder sogar zu einer Beschädigung (Wackelkontakt oder Totalausfall) führen könnte. Anders ausgedrückt, die Erfmdung ermöglicht es, eine Kamera beziehungsweise eine elektrische Platine im Inneren einer Kamera im wesentlichen ohne zusätzliche Krafteinwirkung auf das Gehäuse, also im wesentlichen kräftefrei, elektrisch leitend zu verbinden. Sowohl bei der Montage der Kamera als auch beim Einsatz im Automobil erfolgt die Kontaktierung ohne einen zusätzlichen Arbeitsschritt. In der Produktion ist eine automatische Kontaktierung mit Hilfe herkömmlicher Nadeladapter möglich.

Durch die erfindungsgemäße Kamera wird es in vorteilhafter Weise möglich, die Kontaktierung sowohl in der Fertigung (beispielsweise bei einem Prüfvorgang) als auch im Automobil durch das Zusammenbauen oder das Entfernen in die anwendungsspezifische Halterung oder in eine Vorrichtung, die der Halterung oder Aufnahme für eine spezifische Anwendung nachempfunden ist, vorzunehmen.

### Zeichnung

Weitere Vorteile und vorteilhafte Ausführungsformen und Weiterbildungen der Erfindung werden anhand der nachfolgenden Figuren sowie deren Beschreibungen dargestellt. Es zeigt im Einzelnen:

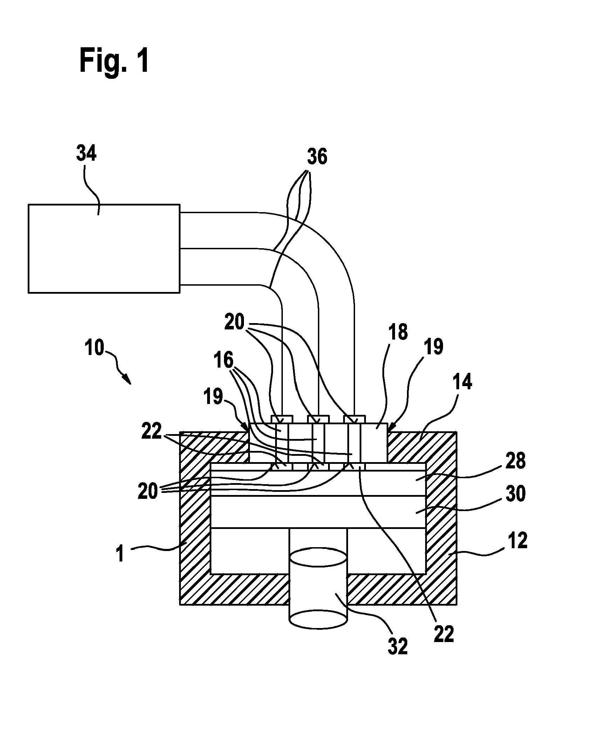

Figur 1 eine Ausführungsform einer erfindungsgemäßen Kamera mit einer erfindungsgemäßen Durchkontaktierung.

### Ausführungsvarianten

Figur 1 zeigt eine vorteilhafte Ausführungsform einer erfindungsgemäßen Kamera 10, welche ein Gehäuseteil 12, eine elektrische Platine 28, ein Sensorelement 30 und eine Optik 32 zur Abbildung eines Objektes auf das Sensorelement 30 aufweist. Das Gehäuseteil 12 umfasst eine Gehäusewand 14, in die ein vorgefertigtes Kontaktmodul 18 durch ein geeignetes Fertigungsverfahren zur dichten Montage in die Gehäusewand 14 mit einer dichten und belastbaren Verbindung 19 eingebracht ist. Beispielsweise kann zur dichten Montage des Kontaktmoduls 18 durch Einpressen, Einkleben, Löten, Laserschweißen oder Eingießen mit der Gehäusewand 14 verbunden werden. Das Kontaktmodul 18 weist daher eine dichte und belastbare Verbindung 19 zur Gehäusewand 14 des Gehäuseteils 12 auf.

Jede der hier beispielhaft drei gezeigten Durchkontaktierungen 16 weist in dieser Ausführungsform jeweils auf der Innenseite 24 und auf der Außenseite 26 der Gehäusewand 14 der Kamera 10 eine Kontakfläche 20 auf. Die Kontaktflächen 20, hier scheibenförmig, auf der Innenseite 24 kommen beim Einsetzen der Platine 28 mit Kontaktelementen 22 in Berührung und ermöglichen eine elektrische Verbindung. Auf der Außenseite 26 wird über die Kontaktflächen 20, hier scheibenförmig, eine elektrisch leitfähige Verbindung beim Einsetzen der Kamera 10 in eine hier nicht näher gezeigte Halterung oder ein Gegenstück, beispielsweise in einem Automobil oder in einem Fahrzeug, durch ein entsprechendes, an der Halterung fest angebrachtes Kontaktelement (wie die Kontaktelemente 22) hergestellt. Beispielsweise können diese Kontaktelemente Stifte, Federstifte, Federbleche, Spiralfedern, Nadeln, Kontaktbleche oder dergleichen sein. Auf diese Weise wird eine elektrische Verbindung 36 (hier schematisch angedeutet durch Leitungen) mit einer außerhalb der Kamera 10 liegenden elektrischen Baugruppe 34 hergestellt.

Während in der in Figur 1 gezeigten Ausführungsform sowohl auf der Innenseite 24 als auch auf der Außenseite 26 der Gehäusewand 14 die Durchkontaktierungen 16 Kontaktflächen 20 aufweisen, können in alternativen Ausführungsformen die Durchkontaktierungen 16 auch nur auf einer Seite (innen oder außen) derartige Kontaktflächen 20 haben. Alternativ dazu können auf der Innenseite 24 und/oder auf der Außenseite 26 die Kontaktflächen 20 durch Kontaktelemente 22, insbesondere solche, wie bereits oben beschrieben, ersetzt sein. Die Kontaktflächen 20 sind dann auf der entsprechenden Gegenseite, Kamerahalterung beziehungsweise elektrische Platine 28 vorgesehen und ausgeführt.

Wiederum alternativ dazu können die in der Figur 1 gezeigten Kontaktflächen 20 auf der Innenseite 24 und/oder der Außenseite 26 durch herkömmliche Steckkontakte, sei es als Buchsen oder als Steckerausfiihrung, oder durch Lötfahnen/Lötflächen ersetzt sein. Des weiteren können die auf der Innenseite 24 und/oder der Außenseite 26 liegenden Kontaktflächen 20 auch durch eine direkte Kabelanbindung, insbesondere ein Kabel, bestehend aus mehreren Leitungen, oder mehrere einzelne Leitungen in einem Leitungskabel, aus dem Kontaktmodul 18 heraus beziehungsweise an jeder Durchkontaktierung 16 ausgeführt sein.

Es sei an dieser Stelle erneut betont, dass alternativ zu dem in Figur 1 gezeigten Verband eines Kontaktmoduls 18 die Durchkontaktierungen 16 auch einzeln in die Gehäusewand 14 mit dichten und belastbaren Verbindungen 19 eingebracht sein können

Bevorzugt umfasst die Kontaktierung der Kamera 10 zehn Einzelleitungen, wobei auf mindestens einer der Leitungen ein Videosignal in digitaler oder in analoger Form übertragbar ist und mindestens zwei Leitungen der Energieversorgung der Kamera 10 dienen.

Die erfindungsgemäße Kamera 10 ist in aufgrund ihres speziellen Aufbaus beziehungweise aufgrund des speziellen Montageverfahrens dicht oder hermetisch gegen Umwelteinflüsse abgeschlossen. Die Kamera 10 kann automatisch kontaktiert werden (IAF).

Bei den über die elektrische Verbindung 36 außerhalb der Kamera 10 liegenden elektrischen Baugruppen 34 kann es sich zum Beispiel um Kombiinstrumente, Navigationssysteme, Fahrzeug-Bussysteme oder drgl. handeln.

Allen vorstehend dargestellten Ausführungsvarianten ist gemeinsam, dass diese eine Krafteinwirkung von außen auf die Platine 28 der Kamera 10 vermeiden, so dass einerseits eine Dejustage des Imagers bzw. ein Bruch der Kontaktierung ausgeschlossen werden kann, was einen Totalausfall der Kamera 10 nach sich ziehen könnte.

Durch die erfindungsgemäße Lösung wird erreicht, dass die Kamera 10 bzw. die elektrische Platine 28 ohne zusätzliche äußere Krafteinwirkung auf das Gehäuse 12 durch die Kontaktelemente 22 kontaktiert werden kann. Damit kann die Kamera 10 sowohl in der Fertigung zum Beispiel bei der Qualitätskontrolle als auch im Fahrzeug durch die zum Zusammenbau der Kamera 10 erforderlichen Schritte bzw. zum Einbau in das Fahrzeug erforderlichen Schritte in der endgültige Halterung oder einer Vorrichtung, die der endgültigen Halterung nachempfunden ist, kontaktiert werden. Die Kamera 10 kann gemäß einer der oben skizzierten Ausführungsvariante auch mit Hilfe herkömmlicher Nadeladapter problemlos kontaktiert werden. Darüber hinaus bietet die erfindungsgemäß vorgeschlagene Lösung den Vorteil einer hermetischen Kapselung dichtend mit dem Gehäuseteil 12 bzw. der Gehäusewand 14 der Kamera 10 zu verbinden.

## Patentansprüche

1. Kamera (10) mit wenigstens einem Gehäuseteil (12), das wenigstens eine Gehäusewand (14) umfasst, durch das eine elektrische Verbindung (36) einer außerhalb der Kamera (10) liegenden elektrischen Baugruppe (34) mit einer sich innerhalb der Kamera (10) befindenden elektrischen Platine (28) herstellbar ist, **dadurch gekennzeichnet, dass** die Gehäusewand (14) wenigstens eine Durchkontaktierung (16) aufweist.

2. Kamera (10) gemäß Anspruch 1,
**dadurch gekennzeichnet,**
**dass** die wenigstens eine Durchkontaktierung (16) auf der Außenseite (26) der Gehäusewand (14) eine Kontaktfläche (20) zur elektrischen Verbindung (36) mit einem Kontaktelement (22) und/oder auf der Innenseite (24) der Gehäusewand (14) eine Kontaktfläche (20) zur elektrischen Verbindung (36) mit einem Kontaktelement (20) aufweist.

3. Kamera (10) gemäß Anspruch 1,
**dadurch gekennzeichnet,**
**dass** die wenigstens eine Durchkontaktierung (16) auf der Außenseite (26) der Gehäusewand (14) ein Kontaktelement (22) zur elektrischen Verbindung (36) mit einer Kontaktfläche (20) und/oder auf der Innenseite (24) der Gehäusewand (14) ein Kontaktelement (22) zur elektrischen Verbindung (36) mit einer Kontaktfläche (22) aufweist.

4. Kamera (10) gemäß Anspruch 2 oder 3,
**dadurch gekennzeichnet,**
**dass** das Kontaktelement (22) ein Stift, ein Federstift, ein Federblech, eine Spiralfeder, eine Nadel oder ein Kontaktblech ist.

5. Kamera (10) gemäß Anspruch 2 oder 3,
**dadurch gekennzeichnet,**
**dass** die Kontaktfläche (20) eine Lötfläche ist.

6. Kamera (10) gemäß Anspruch 1,
**dadurch gekennzeichnet,**
**dass** die wenigstens eine Durchkontaktierung (16) auf der Außenseite (26) der Gehäusewand (14) einen Steckkontakt oder eine Lötfahne zur elektrischen Verbindung (36) mit einem Kontaktelement (22) und/oder auf der Innenseite (24) der Gehäusewand einen Steckkontakt oder eine Lötfahne zur elektrischen Verbindung (36) mit einem Kontaktelement (22) aufweist.

7. Kamera (10) gemäß Anspruch 1, **dadurch gekennzeichnet, dass** wenigstens eine Durchkontaktierung (16) auf der Außenseite (26) der Gehäusewand (14) ein Kontaktelement (22) zur elektrischen Verbindung (36) mit einem Steckkontakt oder einer Lötfahne und/oder auf der Innenseite (24) der Gehäusewand (14) ein Kontaktelement (22) zur elektrischen Verbindung (36) mit einem Steckkontakt oder einer Lötfahne aufweist.

8. Kamera (10) gemäß Anspruch 1, **dadurch gekennzeichnet, dass** die wenigstens eine Durchkontaktierung (16) auf der Außenseite (26) der Gehäusewand (14) ein Kabel zur elektrischen Verbindung (36) mit einem Kontaktelement (22) und/oder auf der Innenseite (24) der Gehäusewand (14) ein Kabel zur elektrischen Verbindung (36) mit einem Kontaktelement (22) aufweist.

9. Kamera (10) gemäß Anspruch 1, **dadurch gekennzeichnet, dass** eine Anzahl von Durchkontaktierungen (16) einzeln in die Gehäusewand (14) eingebracht sind.

10. Kamera (10) gemäß Anspruch 1, **dadurch gekennzeichnet, dass** eine Anzahl von Durchkontaktierungen (16) in einem Konktaktmodul (18) zusammen in der Gehäusewand (14) aufgenommen sind.

11. Kamera (10) gemäß Anspruch 1, **dadurch gekennzeichnet, dass** die Anzahl von Durchkontaktierungen (16) im Kontaktmodul (18) auf der Außenseite (26) der Gehäusewand (14) ein Kabel mit mehreren Leitungen zur elektrischen Verbindung (36) mit einer Anzahl von Kontaktelementen (22) und/oder auf der Innenseite (24) der Gehäusewand (14) ein Kabel mit mehreren Leitungen zur elektrischen Verbindung (36) mit einer Anzahl von Kontaktelementen (22) aufweist.

12. Kamera (10) gemäß einem der vorstehenden Ansprüche,
**dadurch gekennzeichnet,**
**dass** die elektrische Verbindung (36) eine Anzahl von Leitungen umfasst, wobei eine der Leitungen der Übertragung eines Videosignals in digitaler Form oder in analoger Form dient und zwei andere der Leitungen für die Energieversorgung der Kamera (10) vorgesehen sind.
